# EUROPÄISCHE PATENTSCHRIFT

(11) **EP 2 265 394 B1**
(45) Veröffentlichungstag und Bekanntmachung des Hinweises auf die Patenterteilung: **01.01.2014**
(21) Anmeldenummer: 09700190.3
(22) Anmeldetag: 05.01.2009
(51) Int. Cl.: B09B 3/00, C10B 57/08, C10B 53/07, C10G 1/02, C10G 1/10, B29K 27/06

(54) **VERFAHREN ZUR REINIGUNG ORGANISCHER RESTSTOFFE, IN EINER SEPARATIONSSTUFE, VOR DER DURCHFÜHRUNG EINER VERÖLUNG DURCH THERMOLYSE UND VORRICHTUNG HIERZU**
PROCESS FOR CLEANING ORGANIC RESIDUES IN A SEPARATION STAGE BEFORE CARRYING OUT DEGREASING BY THERMOLYSIS, AND DEVICE THEREFOR
PROCÉDÉ D'ÉPURATION DE RÉSIDUS ORGANIQUES DANS UN ÉTAGE DE SÉPARATION AVANT RÉALISATION D'UNE TRANSFORMATION EN HUILE PAR THERMOLYSE ET DISPOSITIF CORRESPONDANT

(30) Priorität: 04.01.2008 DE 102008003837
(43) Veröffentlichungstag der Anmeldung: 29.12.2010
(73) Patentinhaber: Nill, Wolf Eberhard, 70569 Stuttgart (DE)
(72) Erfinder: MATSCHINER, Hermann, 06114 Halle (DE); NILL, Wolf Eberhard, 70569 Stuttgart (DE)
(74) Vertreter: Vonnemann, Gerhard
(86) Internationale Anmeldenummer: PCT/EP2009/000015
(87) Internationale Veröffentlichungsnummer: WO 2009/087080

(56) Entgegenhaltungen:
- EP-A- 0 501 274
- DE-C1- 4 329 435
- JP-A- 9 291 289
- US-A- 4 263 124
- US-A- 5 772 041

## Beschreibung

### Technisches Gebiet:

Der nächstliegende Stand der Technik ist aus dem Dokument US 577 2041-A bekannt, das die Oberbegriffe eines erfindungsgemäßen Verfahrens gemäß Anspruch 1 und einer ebensolchen Vorrichtung gemäß Anspruch 8 offenbart.

Die Erfindung betnfit ein Verfahren und eine Vorrichtung zur Reinigung organischer Reststoffe, wie Kunststoffe, Altöle oder Biomasse, von Störstoffen, in einer Separationsstufe, vor der Durchführung einer Verölung dieser Reststoffe durch Thermolyse.

### Stand der Technik:

Zur Verölung von organischen Reststöffen ist eine Reihe von Verfahren bekannt, die sich entweder für reine oder gemischte Kunststoffabfälle oder für Biomasse eignen. Die meisten der bekannten Verfahren eignen sich allerdings nur zur Verölung von Polyolefinabfällen aus PE, PP sowie PS, da Kunststoffe, die Halogenverbindungen oder auch in starkem Maße Weichmacher enthalten, die Thermolyse stören. Ebenso stellen Begleitstoffe, wie z.B. Wasser, Sand, Glas, Metallteile, eine unerwünschte Belastung für die Durchführung des Prozesses dar. Dies führt zu großen Problemen in der Prozesstechnik und/oder auf der Produktseite. Derartig verunreinigte Kunststoffe können zwar vor einer Thermolyse sortiert und gereinigt werden, jedoch steigt der hierfür erforderliche Aufwand stark mit dem geforderten Reinheitsgrad an und vermindert die Wirtschaftlichkeit des Gesamtprozesses. Deshalb ist es wünschenswert, dass ein bestimmter Anteil Halogeriverbindungen zugelassen werden kann.

PVC jedoch stört bereits in kleinen Mengen den Verölungsprozess. Es wurde deshalb versucht, durch Zusatz von Ammoniak, Harnstoff oder Kalk die bei der thermischen Spaltung von PVC-haltigen Kunststoffen gebildete Salzsäure, HCl, zu binden oder, wie beim BASF-Verfahren, diese abzutrennen DE 43 24 112). Dazu wird der polyolefinische Kunststoffmüll in einem Rührbehälter bis auf 300 bis 350 °C aufgeschmolzen, und dabei entstehende gasförmige Produkte, die auch freigesetzte Salzsäure enthalten, werden abgetrennt. Anschließend wird die Schmelze in einem Röhrenspaltofen bei 400°C bis 450°C weiter zersetzt. Die industrielle Umsetzung dieses Verfahrens scheiterte wegen technischer Schwierigkeiten nicht zuletzt bei der Einhaltung des notwendigen Temperaturprofils in der Aufschmelzphase, da es durch die hohe Temperaturspreizung zwischen dem Reaktorinhalt und der mit einem Heizmantel umgebenen Reaktorwand zu Verkokungen an diesem kommt. Dabei ist zudem von Nachteil, dass das Aufschmelzen bei Temperaturen erfolgt, bei denen neben der Enthalogenierung auch schon C-C-Crackreaktionen stattfinden und die abgetrennte Gasphase sowohl Crackgase als auch Salzsäuredämpfe enthält, die anschliessend getrennt werden müssen. Außerdem können unkontrollierte Nebenreaktionen zu unerwünschten Produkten führen. Auch feste, d.h. nicht schmelzende Kunststoffbegleitstoffe können im Aufschmelzreaktor nicht abgetrennt werden und müssen erst den gesamten Röhrenreaktor durchlaufen. Dies führt zu einer nachteiligen werkstofflichen und energetischen Belastung dieses Anlagenteils.

Der Erfindung liegt das Problem zugrunde, für die Durchführung einer Thermolyse, beispielsweise gemäß der WO 2005/07 1043-A1, auch solche Reststoffe, wie Kunststoffe, Altöle oder Biomasse, einzusetzen, welche störende Stoffe, wie Halogenverbindungen, aber auch Weichmacher oder Wasser sowie störende Begleitstoffe höherer Dichte, enthalten.

### Technische Aufgabe:

Der Erfindung liegt deshalb die Aufgabe zugrunde, ein Verfahren und eine Vorrichtung zu entwickeln, welche es erlauben, Reststoffe, wie Kunststoffe, Altöle oder Biomasse, welche mit Stoffen, wie Halogenverbindungen, Weichmacher, Wasser sowie Begleitstoffe höherer Dichte, verunreinigt sind, welche die Durchführung einer Thermolyse stören, von derartigen störenden Stoffen vor der Durchführung der Thermolyse, beispielsweise gemäß der WO 2005/07 1043-A1, weitestgehend zu säubern und derartige störende Stoffe abzutrennen.

### Offenbarung der Erfindung und deren Vorteile;

Dieses Problem wird patentgemäß mittels den Verfahren gemäß Anspruch 1 dadurch gelöst, dass die Reststoffe in einem geschlossenen Reaktor unter Schutzgas bis zur Schmelze erhitzt und die dabei entstehenden flüchtigen Störstoffe, wie Halogenverbindungen, Schwefelverbindungen, Weichmacher und/oder Wasser, zusammen mit dem Schutzgas unter reduziertem Druck abgezogen werden und das Schutzgas von den flüchtigen Störstoffen gereinigt wird, wonach das Schutzgas zum weiteren Strippen der Reststoffschmelze gepulst derselben wieder zugeführt wird.

In weiterer Ausgestaltung des erfindungsgemäßen Verfahrens erfolgt das Pulsen des Schutzgases zum Strippen der Reststoffschmelze dergestalt, dass ein annähernd resonanter Schwingungszustand der Schmelze erreicht wird, wobei die Resonanzfrequenz vorzugsweise zwischen 20 Hz bis 50 Hz betragen kann.

Im erfindungsgemäßen Verfahren wird das aus dem Reaktor abgezogene Schutzgas mitsamt den darin entstandenen flüchtigen Störstoffen in wenigstens einer Reinigungsstufe gereinigt. Des Weiteren können die Reststoffe auf Temperaturen zwischen 220 und 290 °C erhitzt werden, wobei die Erwärmung bei einer geringen Temperaturdifferenz zwischen dem Wärmeüberträger und den zu schmelzenden und aufgeschmolzenen Reststoffen erfolgt.

Im erfindungsgemäßen Verfahren werden die Begleitstoffe höherer Dichte am Boden des Reaktors ausgetragen.

In weiterer Ausgestaltung des erfindungsgemäßen Verfahrens wird vor der Reinigung des Schutz- oder Strippgases von den flüchtigen Störstoffen das Gas abgekühlt, so dass die darin enthaltenen gasförmigen Störstoffe kondensieren.

In weiterer Ausgestaltung des erfindungsgemäßen Verfahrens kann unterhalb des Bodens des Reaktors ein zweiter Pulsator angeordnet sein, der mit der Reststoffschmelze in Verbindung steht und der dieselbe in Pulsation versetzt, wobei vorzugsweise eine resonante Pulsation der Reststoffschmelze angestrebt wird.

Die Erwärmung muss unter geringer Temperaturspreizung zwischen dem Wärmeüberträger und den geschmolzenen Reststoffen erfolgen. Die Zuführung von verdichteten und dadurch weitgehend sauerstofffreien Reststoffen in den Reaktor erfolgt unter Schutzgaszuführung.

Zum Ausstrippen der entstehenden flüchtigen Störstoffe wird in die Reststoffschmelze das aus dem Reaktorgasraum abgezogene, die flüchtigen Stoffe enthaltende Schutzgas als Strippgas eingeleitet, welches beim Abziehvorgang über eine oder mehrere Reinigungsvorrichtungen, beispielsweise eine alkalisch eingestellte Waschvorlage zur Entfernung von sauren Begleitstoffen, wie HCl-Gas, oder andere Trennstufen zur Entfernung der entstandenen flüchtigen Stoffe geführt wird. Das Strippgas wird dabei in den unteren Teil des Reaktors eingeleitet und gegebenenfalls im Kreislauf geführt.

Patentgemäß, ist ein gepulster Eintrag des Strippgases zum besseren Stoffaustausch zwischen der Schmelze und dem Strippgas im Reaktor. Vorteilhaft ist die Frequenz so zu steuern ist, dass ein annähernd resonanter Schwingungszustand der Schmelze erreicht wird. Die Frequenz kann in vorteilhafter Weise beispielsweise zwischen 20 bis 50 Hz liegen.

Die Begleitstoffe höherer Dichte scheiden sich aufgrund dynamischer und sedimentativer Effekte unten am Boden des Reaktors ab und werden durch ein spezielles Schleusensystem aus dem Reaktor durch eine Austragsöffnung für die Störstoffe ausgetragen.

Das so vorbehandelte Material der organischen Reststoffe wird nach bekannten Thermolyseverfahren, beispielsweise gemäß dem Thermolyseverfahren der WO 2005/07 1043-A1 weiterbehandelt, beispielsweise gestuft erhitzt.

Diese patentgemäße Verfahrensweise hat die Vorteile, dass beim Aufschmelzen der Reststoffe die die Thermolyse störenden Stoffe weitgehend entfernt und von Crackgasen gasförmig abgetrennt sind und gleichzeitig feste, nicht schmelzende Begleitstoffe bzw. solche mit höherer Dichte als die Schmelze separiert und getrennt weiterbehandelt werden können.

Gut geeignet ist diese Separatorstufe, wenn sie beispielsweise als erste Stufe im mehrstufigen Syntrol^{®} -Verfahren (DE 10 2004 003 667) fungiert, da dann auch organische Reststoffe, die unter anderen PVC- und Weichmacheranteile aufweisen, eingesetzt werden können, weil die anschließende Thermolyse durch sie nicht beeinträchtigt wird.

Die Aufgabe wird des Weiteren mittels einer Vorrichtung gemäß Anspruch 8, zur Reinigung organischer Reststoffe, wie Kunststoffe, Altöle oder Biomasse, von Störstoffen, in einer einen Reaktor aufweisenden Separationsstufe, vor der Durchführung einer Verölung dieser Reststoffe durch Thermolyse, dadurch gelöst, dass der Reaktor ein geschlossenen Rührreaktor mit einer innen liegenden Röhrenheizung ist und eine Zuführung für die Reststoffe, eine am Boden befindliche Austragsöffnung für die störenden Begleitstoffe höherer Dichte, eine Verbindungsleitung in den Thermolysereaktor für die geschmolzenen Reststoffe, einen im Gasraum befindlichen Stutzen zur Schutzgaszuführung bzw. -überlagerung sowie einen zum Anlegen von Unterdruck dienenden Gasabzugstutzen aufweist, wobei der Gasabzugstutzen über wenigstens eine Reinigungsstufe zur Abtrennung der entstandenen flüchtigen Störstoffe aus dem Schutzgas über einen Verdichter mit einer Gaseinblasvorrichtung für das Schutzgas im unteren Teil des Reaktors zum Strippen der Reststoffschmelze verbunden ist.

In der erfindungsgemäßen Vorrichtung ist zwischen dem Verdichter und der Gaseinblasvorrichtung eine erste Vorrichtung zur gepulsten Schwingungserzeugung, Pulsator, angeordnet zur gepulsten Schwingungserzeugung des Schutzgases bei der Rückführung desselben durch die Gaseinblasvorrichtung in den Reaktor. Zusätzlich kann unterhalb des Reaktors im Bereich der Austragsöffnung für die nichtflüchtigen Störstoffe ein zweiter Pulsator angeordnet sein, welcher zur gepulsten Schwingungserzeugung der Restschmelze mit derselben in Verbindung steht.

In weiterer Ausgestaltung der erfindungsgemäßen Vorrichtung weisen die Reinigungsstufen Wäscher auf, beispielsweise zum Auswaschen von Säuren sowie von Kohlenwasserstoffen.

In weiterer Ausgestaltung der erfindungsgemäßen Vorrichtung ist vor der wenigstens einen Reinigungsstufe zum Abtrennen der entstandenen flüchtigen Störstoffe aus dem Schutzgas ein Kondensor angeordnet zum Kondensieren der flüchtigen Störstoffe.

Somit eignet sich zur Durchführung des erfindungsgemäßen Verfahrens ein geschlossener Rührreaktor, mit innen liegender Röhrenheizung, zum Beispiel Röhrenwendeln, für einen flüssigen oder gasförmigen Wärmeträger, einer Zuführung für die Reststoffe, einer am Boden befindlichen Austragsöffnung für die störenden Begleitstoffe höherer Dichte, einer Verbindungsleitung in den Thermolysereaktor für die geschmolzenen Reststoffe, einen im Gasraum befindlichen Stutzen zur Schutzgaszuführung sowie einem Gasabsaugstutzen, an dem ein niedriger Druck angelegt wird und der über Reinigungsstufen zur Abtrennung der entstandenen flüchtigen Störstoffe aus dem Gas sowie einen Verdichter mit einer Gaseinblasvorrichtung im unteren Teil des Reaktors zur Strippung der Schmelze verbunden ist.

Zum Pulsen des Strippgases dient eine Vorrichtung zur gepulsten Schwingungserzeugung zwischen dem Verdichter und der Gaseinblasvorrichtung, nämlich ein erster Pulsator. Vorzugsweise soll die Pulsatorfrequenz des eingeleiteten Strippgases im Bereich der Resonanzfrequenz der Reststoffschmelze liegen; beispielsweise kann die Pulsatorfrequenz zwischen 20 Hz bis 50 Hz betragen. Am Boden des Reaktors kann des Weiteren ein zweiter Pulsator angeordnet sein, welcher die gesamte Reststoffschmelze in Schwingung versetzt bzw. die durch den ersten Pulsator erzeugte Pulsatorfrequenz des Strippgases unterstützt.

Die Erfindung wird nachstehend anhand eines Beispiels näher erläutert.

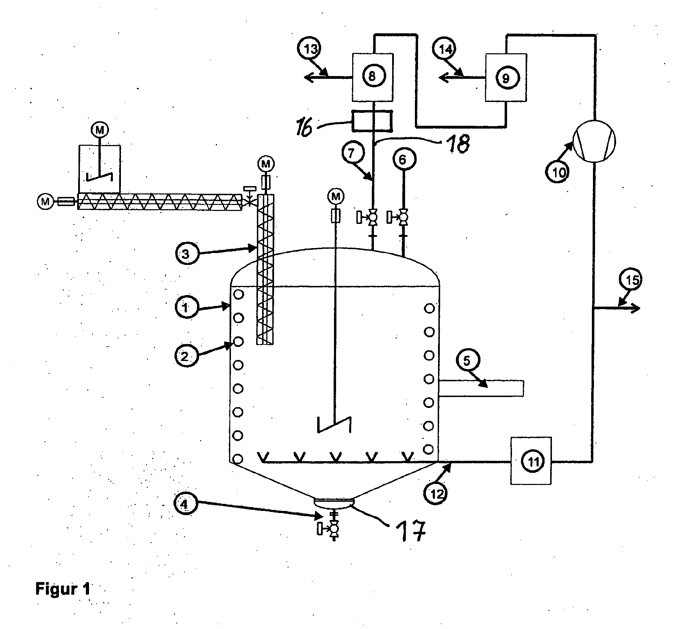

Figur 1 zeigt einen Reaktor zur Durchführung der Separationsstufe.

### Ausführungsform der Erfindung:

Als Reaktor für die Durchführung der Separation dient ein geschlossener Behälter 1 mit einer innen liegenden Röhrenheizung 2 im Flüssigkeitsraum, einem Rührwerk M, sowie Zuführung für die Reststoffe 3, wobei die Zuführung aus wenigstens einer Förderschnecke bestehen kann. Am Boden des Reaktors 1 befindet sich eine Austragsöffnung 4 für die nichtflüchtigen Störstoffe höherer Dichte, sowie seitlich an der Reaktorwandung eine Verbindungsleitung 5, welche zu einem nicht gezeigten Thermolysereaktor führt. Vorzugsweise im oberen Reaktorteil des Reaktors 1, der Gasraum, befindet sich ein Stutzen 6 zur Zuführung oder auch Überlagerung eines Schutzgases, Strippgas, ebenso wie sich vorzugsweise im oberen Reaktorteil ein Absaugstutzen 7 zum Abziehen des mit flüchtigen Störstoffen beladene Schutzgases befindet. Als Schutzgas wird vorzugsweise Stickstoff oder Argon oder Kohlendioxid verwendet.

Die sich an den Absaugstutzen 7 anschließende Leitung 18 führt über einen Kondensor 16 und danach über zwei anschließende Reinigungsstufen 8 und 9. Im Kondensor 16 werden die gasförmigen Störstoffe kondensiert, wobei die Temperatur des Strippgases nur noch bis zu 50°C beträgt. In der ersten Reinigungsstufe 8, welche bevorzugt ein Wäscher mit einem Austragstutzen 13 zur Entfernung der abgetrennten Störstoffe ist, werden Störstoffe einer ersten Gruppe, zum Beispiel Säuren, wie Salzsäure, ausgewaschen. In der zweiten Reinigungsstufe 9, welche bevorzugt ebenfalls ein Wäscher mit einem Austragstutzen 14 zur Entfernung der abgetrennten Störstoffe ist, werden Störstoffe einer zweiten Gruppe, zum Beispiel Kohlenwasserstoffe, ausgewaschen.

Nach der Reinigungsstufe 9 wird das Schutzgas einem Verdichter 10 und danach einem Pulsator 11 zugeführt, welcher ein steuerbares Ventil zur Pulserzeugung innerhalb des Schutzgases sein kann. Das pulsierende Schutz- oder Strippgas wird nach dem Pulsator 11 über Einblasöffnungen einer Gaseinblasvorrichtung 12, welche sich am Boden des Reaktors 1 befinden, in den Reaktor wieder zurückgeführt, so dass das Schutzgas in einem Kreislauf geführt wird. Ein Stutzen 15 nach dem Verdichter 10 und vor dem Pulsator 11 dient zum Auslass von Überschussgas.

Unterhalb des Reaktors 1 kann ein zweiter Pulsator 17 angeordnet sein, welcher mit der Reststoffschmelze in Verbindung steht. Dieser Pulsator 17 dient dazu, die Restschmelze in Pulsation zu versetzen, wobei vorzugsweise eine resonante Schwingung der Restschmelze erzielt wird.

Die Erfindung ist somit gekennzeichnet durch ein Verfahren zur Reinigung von organischen Reststoffen vor der Durchführung einer Thermolyse der Reststoffe sowie durch eine Vorrichtung zur Durchführung des Verfahrens.

Die meisten der bekannten Thermolyseverfahren eignen sich nur zur Verölung von Polyolefinabfällen aus PE, PP sowie PS, wobei Kunststoffe, welche Halogenverbindungen oder auch in starkem Maße Weichmacher enthalten, die Thermolyse stören. Ebenso stellen Begleitstoffe, wie z.B. Wasser, Sand, Glas oder Metallteile, eine unerwünschte Belastung für die Durchführung des Thermolyseverfahren dar.

In einer Vorstufe vor dem Thermolyseprozess werden die organischen Reststoffe zunächst auf Temperaturen zwischen 220°C bis 290°C erhitzt. Die dabei entstehenden flüchtigen Stoffe, insbesondere Salzsäure, Weichmacher und Wasser, werden mit einem Schutzgas gestrippt und unter reduziertem Druck abgezogen. Die Zuführung der Reststoffe in den Reaktor erfolgt unter Schutzgaszuführung. Das aus dem Reaktorgasraum abgezogene, die flüchtigen Störstoffe enthaltende Schutzgas kann gereinigt als Strippgas eingesetzt werden. Das Strippgas wird dem unteren Teil des Reaktors zugeführt, so dass es in einem Kreislauf verläuft. Patentgemäß ist ein gepulster Eintrag des Gases zum besseren Stoffaustausch zwischen der Reststoffschmelze und dem Strippgas im Reaktor. Zusätzlich kann zur weiteren Verbesserung des Stoffaustauschs auch die gesamte Reststoffschmelze in Schwingungen versetzt werden.

Die Begleitstoffe höherer Dichte scheiden sich aufgrund dynamischer und sedimentativer Effekte unten am Boden des Reaktors ab und werden durch ein spezielles Schleusensystem aus dem Reaktor ausgetragen.

Das Strippgas wird von die Thermolyse behindernden Störstoffen, wie insbesondere organische Reststoffe, Halogenverbindungen, aber auch Weichmacher oder Wasser, gereinigt.

Die Erfindung besitzt allgemein den Vorteil, dass zur Abtrennung von Störstoffen, welche eine nachfolgende Thermolyse beeinträchtigen, ein schonendes Aufheizen der Reststoffe in einem Rührwerksbehälter mittels einer innen liegenden gewendelten Röhrenheizung erfolgt, wobei wenigstens ein Pulsator, vorzugsweise einer für das Strippgas, vorgesehen ist, wodurch die Restschmelze in Schwingung versetzt wird. Vorzugsweise dient der eine Pulsator zur Erzeugung einer Pulsation des Strippgases bei dessen Rückführung in den Reaktor.

### Liste der Bezugszeichen:

- 1: Geschlossener Rührwerksbehälter, ausgebildet als Druckbehälter
- 2: Heizwendel für flüssigen Wärmeträger
- 3: Zuführsystem für Reststoffe
- 4: Austragsöffnung für Störstoffe
- 5: Verbindungsleitung zu einem Thermolysebehälter
- 6: Stutzen für Schutzgasüberlagerung
- 7: Gasabzugsstutzen
- 8: Reinigungsstufe 1
- 9: Reinigungsstufe 2
- 10: Verdichter
- 11: erster Pulsator
- 12: Gaseinblasvorrichtung
- 13: Austragstutzen für Störstoffe Gruppe 1
- 14: Austragstutzen für Störstoffe Gruppe 2
- 15: Auslassstutzen für Überschussgas
- 16: Kondensor
- 17: zweiter Pulsator
- 18: Leitung

## Patentansprüche

1. Verfahren zur Reinigung organischer Reststoffe, wie Kunststoffe, Altöle oder Biomasse, von Störstoffen, in einer Separationsstufe unter Verwendung eines Reaktors (1), vor der Durchführung einer Verölung dieser Reststoffe durch Thermolyse, wobei die Reststoffe in einem geschlossenen Reaktor (1) unter Schutzgas bis zur Schmelze erhitzt und die dabei entstehenden flüchtigen Störstoffe, wie Halogenverbindungen, Schwefelverbindungen, Weichmacher oder Wasser, zusammen mit dem Schutzgas unter reduziertem Druck abgezogen werden und das Schutzgas von den flüchtigen Störstoffen gereinigt wird, **dadurch gekennzeichnet,**
**dass** das Schutzgas zum weiteren Strippen der Reststoffschmelze gepulst derselben wieder zugeführt wird und störende Begleitstoffe höherer Dichte über eine am Boden befindliche Austragsöffnung (4) des als geschlossenen Rührreaktor ausgebildeten Reaktors ausgetragen werden, und die geschmolzenen Reststoffe über eine Verbindungsleitung (5) einem Thermolysereaktor zugeführt werden.

2. Verfahren nach Anspruch 1, **dadurch gekennzeichnet, dass** das Pulsen des Schutzgases zum Strippen der Reststoffschmelze dergestalt erfolgt, dass ein annähernd resonanter Schwingungszustand der Schmelze erreicht wird, wobei die Resonanzfrequenz vorzugsweise zwischen 20 Hz bis 50 Hz betragen kann.

3. Verfahren nach Anspruch 1 oder 2, **dadurch gekennzeichnet,**
**dass** das aus dem Reaktor (1) abgezogene Schutzgas mitsamt den darin entstandenen flüchtigen Störstoffen in wenigstens einer Reinigungsstufe (8,9) gereinigt wird.

4. Verfahren nach einem der vorherigen Ansprüche 1 bis 3,
**dadurch gekennzeichnet, dass** die Reststoffe auf Temperaturen zwischen 220°C und 290°C erhitzt werden, wobei die Erwärmung bei einer geringen Temperatur-differenz zwischen dem Wärmeüberträger (2) und den geschmolzenen Reststoffen erfolgt.

5. Verfahren nach Anspruch 1, **dadurch gekennzeichnet,**
**dass** vor der Reinigung des Schutz- oder Strippgases von den flüchtigen Störstoffen das Gas abgekühlt wird, so dass die darin enthaltenen gasförmigen Störstoffe kondensieren.

6. Verfahren nach Anspruch 1, **dadurch gekennzeichnet,**
**dass** unterhalb des Bodens des Reaktors (1) ein zweiter Pulsator (17) angeordnet ist, welcher mit der Reststoffschmelze in Verbindung steht und welcher dieselbe in Pulsation versetzt, wobei vorzugsweise eine resonante Pulsation der Reststoffschmelze angestrebt wird.

7. Verfahren nach einem der vorherigen Ansprüche, **dadurch gekennzeichnet, dass** als Schutzgas Stickstoff oder Argon oder Kohlendioxid verwendet wird.

8. Vorrichtung zur Reinigung organischer Reststoffe, wie Kunststoffe, Altöle oder Biomasse, von Störstoffen, in einer einen Reaktor (1) aufweisenden Separationsstufe, vor der Durchführung einer Verölung dieser Reststoffe durch Thermolyse, wobei der Reaktor (1) ein geschlossenen Reaktor mit einer innen liegenden Röhrenheizung (2) ist und eine Zuführung (M, 3) für die Reststoffe, eine am Boden befindliche Austragsöffnung (4) für die störenden Begleitstoffe höherer Dichte, einen im Gasraum befindlichen Stutzen (6) zur Schutzgaszuführung bzw. -überlagerung sowie einen zum Anlegen von Unterdruck dienenden Gasabzugstutzen (7) aufweist, wobei der Gasabzugstutzen (7) über wenigstens eine Reinigungsstufe (8, 9) zur Abtrennung der entstandenen flüchtigen Störstoffe aus dem Schutzgas und zum Gasabzug dient, **dadurch gekennzeichnet,**
**dass** eine Verbindungsleitung (5) in den Thermolysereaktor für die geschmolzenen Reststoffe existiert und der geschlossene Reaktor als Rührreaktor ausgebildet ist, wobei der Gasabzugstutzen (7) über einen Verdichter (10) mit einer Gaseinblasvorrichtung (12) für das Schutzgas im unteren Teil des Reaktors (1) zum Strippen der Reststoffschmelze verbunden ist, wobei zwischen dem Verdichter (10) und der Gaseinblasvorrichtung (12) eine erste Vorrichtung (11), Pulsator (11), angeordnet ist zur gepulsten Schwingungserzeugung des Schutzgases bei der Rückführung desselben durch die Gaseinblasvorrichtung (12) in den Reaktor (1).

9. Vorrichtung nach Anspruch 8 **dadurch gekennzeichnet,**
**dass** unterhalb des Reaktors (1) im Bereich der Austragsöffnung (4) für die nichtflüchtigen Störstoffe ein zweiter Pulsator (17) angeordnet ist, welcher zur gepulsten Schwingungserzeugung der Restschmelze mit derselben in Verbindung steht.

10. Vorrichtung nach einem der Ansprüche 8 oder 9 **dadurch gekennzeichnet,**
**dass** die Reinigungsstufen Wäscher (8,9) zum Auswaschen von Säuren sowie von Kohlenwasserstoffen aufweist.

11. Vorrichtung nach einem der Ansprüche 8 bis 10, **dadurch gekennzeichnet,**
**dass** vor der wenigstens einen Reinigungsstufe (8,9) zum Abtrennen der entstandenen flüchtigen Störstoffe aus dem Schutzgas ein Kondensor (16) angeordnet ist zum Kondensieren der flüchtigen Störstoffe.

## Claims

1. A process for purifying organic residues, such as plastics, waste oil or biomass, from interfering substances in a separation stage using a reactor (1) before carrying out depolymerization of said residues by thermolysis, wherein said residues are heated to melting under a protective gas in a closed reactor (1) and the resultant volatile interfering substances, such as halogen compounds, sulphur compounds, plasticizers and/or water, are stripped under reduced pressure together with the protective gas, and said protective gas is purified from said volatile interfering substances, **characterized in that** the protective gas, for further stripping the molten residues, is fed back into the latter in a pulsed state, and interfering accompanying substances of higher density are discharged via a discharge opening (4) in the bottom of said reactor which is configured as a closed stirred reactor, and the molted residues are fed into a thermolysis reactor via a connecting line (5).

2. A process according to claim 1, **characterized in that** pulsation of said protective gas for stripping said molten residues is effected in a way to achieve a nearly resonant oscillation of the molten materials, a resonance frequency being preferably between 20 Hz and 50 Hz.

3. A process according to claim 1 or 2, **characterized in that** said protective gas stripped from said reactor (1) is purified in at least one purification stage (8, 9) together with the volatile interfering substances generated therein.

4. A process according to one of claims 1 to 3, **characterized in that** said residues are heated to a temperature between 220 °C and 290 °C, wherein said heating is carried out at a small temperature difference between the heat transfer device (2) and the molten residues.

5. A process according to claim 1, **characterized in that** the protective or strip gas is cooled down before purifying said gas from said volatile interfering substances, for condensing the gaseous interfering substances contained therein.

6. A process according to claim 1, **characterized in that** a second pulsator (17) is disposed in communication with said molten residues beneath the bottom of said reactor (1) and makes said molten materials pulsate, wherein a resonant pulsation of said molten residues is preferably achieved.

7. A process according to one the preceding claims, **characterized in that** nitrogen or argon or carbon monoxide are used as said protective gas.

8. A device for purifying organic residues, such as plastics, waste oil or biomass, from interfering substances in a separation stage including a reactor (1) before carrying out depolymerization of said residues by thermolysis, wherein said reactor (1) is a closed reactor having an inner tube heating (2) and comprising a supply line (M, 3) for said residues, a opening (4) in the bottom (1) for discharging interfering impurities of higher density, a nozzle (6) located in the gas chamber for supplying or overlaying a protective gas, and a gas vent nozzle (7) for applying negative pressure, wherein said gas vent nozzle (7) serves to separate the generated volatile impurities from said protective gas via at least one purification stage and to vent off gas, **characterized in that** a connecting line (5) for said molten residues is provided in the thermolysis reactor, and the closed reactor is configured as a stirred reactor, wherein the gas vent nozzle (7) is connected to a gas injection device (12) for said protective gas in a lower part of said reactor (1) via a compressor (10), for stripping molten residues, wherein a first device (11), pulsator (11), is disposed between said compressor (10) and said gas injection device (12), for creating oscillation pulses of said protective gas while recirculating the same via said gas injection device (12) into said reactor (1).

9. A device according to claim 8, **characterized in that** a second pulsator (17) is disposed beneath said reactor (1) in an area of said discharge opening (4) for said non-volatile impurities, which second pulsator is in communication with the molten residues, for creating oscillation pulses within the same.

10. A device according to one of claims 8 or 9, **characterized in that** said purification stage is provided with scrubbers (8, 9) for washing out acids and carbon hydrogens.

11. A device according to one of claims 8 to 10, **characterized in that** a condenser (16) for condensing volatile impurities is disposed upstream of said at least one purification stage (8, 9), for separating the generated volatile impurities from said protective gas.

## Revendications

1. Procédé d'épuration de résidus organiques tels que des plastiques, des huiles usées ou de la biomasse pour éliminer les substances parasites, dans un étage de séparation en utilisant un réacteur (1), avant réalisation d'une transformation en huile de ces résidus par thermolyse, procédé dans lequel les résidus sont chauffés jusqu'à fusion en présence d'un gaz protecteur dans un réacteur fermé (1) et les substances parasites volatiles produites telles que des composés halogénés, des composés de soufre, des plastifiants ou de l'eau sont extraites avec le gaz protecteur sous pression réduite et le gaz protecteur est ensuite libéré des substances parasites volatiles, **caractérisé en ce que** pour le lavage ultérieur de la masse de résidus en fusion, le gaz protecteur est réintroduit de façon pulsée dans celle-ci, et les substances parasites accompagnantes présentant une masse volumique plus élevée sont évacuées via un orifice de sortie (4) du réacteur conçu comme réacteur agité fermé, et les résidus fondus sont acheminés vers une réacteur de thermolyse via une conduite de liaison (5).

2. Procédé selon la revendication 1, **caractérisé en ce que** la pulsation du gaz protecteur pour le lavage de la masse de résidus en fusion s'effectue de sorte qu'on atteint un état vibratoire approximativement résonant de la masse en fusion, la fréquence de résonance pouvant être comprise de préférence entre 20 Hz et 50 Hz.

3. Procédé selon la revendication 1 ou 2, **caractérisé en ce que** le gaz protecteur évacué du réacteur (1) comportant les substances parasites volatiles produites, est épuré dans au moins un étage d'épuration (8,9).

4. Procédé selon l'une des revendications précédentes 1 à 3, **caractérisé en ce que** les résidus sont chauffés à des températures comprises entre 220°C et 290°C, le chauffage s'effectuant à une faible différence de température entre le caloporteur (2) et les résidus fondus.

5. Procédé selon la revendication 1, **caractérisé en ce que**, avant d'épurer le gaz protecteur ou le gaz de lavage pour éliminer les substances parasites volatiles, le gaz est refroidi de sorte que les substances parasites gazeux y contenues se condensent.

6. Procédé selon la revendication 1, **caractérisé en ce qu'**un deuxième pulsateur (17) est disposé au-dessous du fond du réacteur (1), lequel pulsateur communique avec la masse de résidus en fusion et la met en pulsation, pour obtenir de préférence une pulsation résonante de la masse de résidus en fusion.

7. Procédé selon l'une des revendications précédentes, **caractérisé en ce que** le gaz protecteur utilisé est de l'azote ou de l'argon ou du dioxyde de carbone.

8. Dispositif d'épuration de résidus organiques tels que des plastiques, des huiles usées ou de la biomasse pour éliminer les substances parasites, dans un étage de séparation présentant un réacteur (1), avant la réalisation d'une transformation en huile de ces résidus par thermolyse, le réacteur (1) étant un réacteur fermé doté à l'intérieur d'un système de chauffage tubulaire (2) et présentant un moyen d'introduction (M, 3) des résidus, un orifice de sortie (4) situé au fond pour évacuer les substances parasites accompagnantes ayant une masse volumique plus élevée, une tubulure (6) se trouvant dans l'espace de tête et servant à l'injection du gaz protecteur ainsi qu'une tubulure d'évacuation du gaz (7) servant à la mise sous vide, ladite tubulure d'évacuation du gaz (7) servant à éliminer, via au moins un étage d'épuration (8,9), les substances parasites volatiles produites dans le gaz protecteur, et à évacuer le gaz, **caractérisé en ce qu'**il existe une conduite de liaison (5) menant au réacteur de thermolyse pour les résidus fondus et le réacteur fermé est conçu comme réacteur agité, la tubulure d'évacuation du gaz (7) étant reliée via un compresseur (10) à un dispositif d'injection (12) du gaz protecteur dans la partie inférieure du réacteur (1) pour le lavage de la masse de résidus en fusion, un premier dispositif (11), pulsateur (11), étant disposé entre le compresseur (10) et le dispositif d'injection du gaz (12) pour engendrer des vibrations pulsées du gaz protecteur lorsque ce dernier est réintroduit dans le réacteur via le dispositif d'injection du gaz (12).

9. Dispositif selon la revendication 8, **caractérisé en ce qu'**un deuxième pulsateur (17) est disposé au-dessous du réacteur (1) dans la zone de l'orifice de sortie des substances parasites non volatiles communiquant avec celui-ci pour engendrer des vibrations pulsées de la masse de résidus en fusion.

10. Dispositif selon l'une des revendications 8 ou 9, **caractérisé en ce que** les étages d'épuration présentent des laveurs (8,9) servant à éliminer les acides et les hydrocarbures.

11. Dispositif selon l'une des revendications 8 à 10, **caractérisé en ce qu'**un condenseur (16) est disposé en amont de l'étage ou des étages d'épuration (8,9) pour l'élimination des substances parasites volatiles produites dans le gaz protecteur, lequel condenseur sert à condenser les substances parasites volatiles.
